# EUROPÄISCHE PATENTSCHRIFT

(11) **EP 3 981 990 B1**
(45) Veröffentlichungstag und Bekanntmachung des Hinweises auf die Patenterteilung: **15.01.2025**
(21) Anmeldenummer: 20200466.9
(22) Anmeldetag: 07.10.2020
(51) Int. Cl.: F16B 1/00, F16B 19/10, F16B 37/06

(54) **VERFAHREN ZUM VERBINDEN EINER VIELZAHL VON EINZELNEN GEGENSTÄNDEN MIT EINER TRÄGERSTRUKTUR UND MONTAGESATZ**
METHOD FOR CONNECTING A PLURALITY OF INDIVIDUAL ITEMS WITH A SUPPORT STRUCTURE AND ASSEMBLY SET
PROCÉDÉ DE RACCORDEMENT D'UNE PLURALITÉ D'OBJETS INDIVIDUELS AU MOYEN D'UNE STRUCTURE PORTEUSE ET ENSEMBLE DE MONTAGE

(43) Veröffentlichungstag der Anmeldung: 13.04.2022
(73) Patentinhaber: SFS Group Germany GmbH, 61440 Oberursel (DE)
(72) Erfinder: SETZER, Sandro, 64546 Mörfelden-Walldorf (DE); NEIDHARDT, Christopher, 64546 Mörfelden-Walldorf (DE); MEISSNER FERNANDEZ-PACHECO, Christian Kurt, 64546 Mörfelden-Walldorf (DE); BOOTH, Stuart, 64546 Mörfelden-Walldorf (DE); LEATHER, James Edward Stuart, 64546 Mörfelden-Walldorf (DE); TAYLOR, Bryan Paul, 64546 Mörfelden-Walldorf (DE)
(74) Vertreter: Keil & Schaafhausen Patentanwälte PartGmbB

(56) Entgegenhaltungen:
- DE-A1- 102011 014 656
- DE-A1- 102014 109 361
- FR-A5- 2 049 334
- GB-A- 839 089
- US-A- 2 914 106
- US-A- 3 789 728
- US-A1- 2004 022 596
- US-A1- 2010 295 696
- US-A1- 2015 137 560
- US-A1- 2018 023 612
- US-A1- 2020 139 425

## Beschreibung

Die vorliegende Erfindung betrifft ein Verfahren zum Verbinden einer Vielzahl von einzelnen Gegenständen mit einer Trägerstruktur mit den Merkmalen des Oberbegriffs des Anspruchs 1, bei dem man Verbindungsmittel durch jeweils eine Öffnung in einen Gegenstand und eine Öffnung in der Trägerstruktur führt, wobei Öffnungen an den Gegenständen und/oder Öffnungen an der Trägerstruktur unterschiedliche Größen aufweisen.

Ferner betrifft die Erfindung einen Montagesatz mit einer Mehrheit von Befestigern mit den Merkmalen des Oberbegriffs des Anspruchs 7.

DE 10 2014 109 361 A1 zeigt eine Blindnietmutter zum Befestigen eines Gegenstands an einer Trägerstruktur, bei dem man Verbindungsmittel in Form von Blindnietmuttern durch jeweils eine Öffnung in dem Gegenstand und in der Trägerstruktur führt. Die Blindnietmuttern weisen einen Nietschaft und ein Innengewinde auf und man formt durch Aufbringen einer Zugkraft einen Schließkopf.

Die Erfindung wird im Folgenden anhand von Solar-Paneelen beschrieben, die in einer Photovoltaik-Anlage montiert werden müssen.

Eine Photovoltaik-Anlage wird dort aufgestellt, wo mit einem hohen Anteil von Sonnenstunden gerechnet werden kann. Dementsprechend sind geeignete Standorte für Photovoltaik-Anlagen oft in entlegenen Gebieten zu finden, wo nicht genügend ausgebildetes Personal für die Montage zur Verfügung steht. Die Montage erfolgt also durch Hilfskräfte, die eingewiesen werden müssen.

Die Solar-Paneele sind vielfach jeweils in einem Rahmen aufgenommen und werden dort festgeklemmt oder auf andere Weise gehalten. Der Rahmen wiederum muss an einer Trägerstruktur, die auch als "Schiene" bezeichnet wird, befestigt werden.

Bekannte Verbindungsmittel sind hierbei Schrauben und Bolzen. Die Schraube wird durch eine Öffnung im Rahmen und eine Öffnung in der Trägerstruktur geführt. Auf das hindurchgeführte Ende der Schraube wird dann eine Mutter aufgeschraubt und festgezogen.

Eine andere Verbindungsmöglichkeit ist ein Schließringbolzen, bei dem ebenfalls ein Befestiger durch die Öffnungen im Rahmen und in der Trägerstruktur geführt werden muss. Von der gegenüberliegenden Seite wird dann ein Schließring aufgesetzt und mit dem Bolzen verpresst. In beiden Fällen ist eine Zugänglichkeit auf beiden Seiten der Öffnungen erforderlich.

Erschwerend kommt hinzu, dass es in einer Photovoltaik-Anlage unterschiedlich große Öffnungen gibt. Vielfach sind die Öffnungen in der Trägerstruktur und/oder die Öffnungen in den Rahmen als Langlöcher ausgebildet. Beispielsweise gibt es in einer Photovoltaik-Anlage eine erste Langlochgröße mit den Abmessungen 9 × 14 mm und eine zweite Langlochgröße mit den Abmessungen 7 × 10 mm. Dementsprechend müssen zwei Größen von Befestigern vorrätig gehalten und in Abhängigkeit von der Größe der Öffnungen auch richtig verwendet werden. Dies macht die Montage der Solar-Paneele kompliziert, zeitaufwändig und fehleranfällig.

DE 10 2011 014 656 A1 zeigt eine Befestigungseinheit mit einer Blindnietmutter und einer Scheibe. Die Blindnietmutter wird in einem Bauteil befestigt, in dem man einen Setzkopf an dem Bauteil anlegt und einen Schließkopf ausbildet. Ein zweites Bauteil wird mit Hilfe der Scheibe befestigt, die einen weiteren Verformungsbereich aufweist, der auf den Setzkopf der Blindnietmutter wirkt.

US 3 789 728 A zeigt eine weitere Blindnietmutter, die einen Setzkopf aufweist und beim Ausbilden eines Schließkopfes Laschen ausbildet, die relativ weit radial nach außen vorstehen.

US 2018/0023612 A1 zeigt eine Blindnietmutter. Auch hier ist neben der eigentlichen Blindnietmutter ein Zusatzelement vorgesehen, das durch einen Bolzen mit der Blindnietmutter zu einer Einheit zusammengefasst ist. Diese Einheit kann dann durch Bohrungen in zu verbindenden Elementen geführt werden. Durch Anziehen des Bolzens bildet sich dann ein Schließkopf aus. Das Zusatzelement ragt mit einem Schaftabschnitt in den oberen Bereich der eigentlichen Blindnietmutter hinein, an der auch der Setzkopf angeordnet ist.

GB 839 089 A zeigt eine Plattenklemme, die einen Fortsatz aufweist, der durch Öffnungen in Platten geführt werden kann. Der Fortsatz weist eine Vertiefung auf. Die Plattenklemme weist einen Schieber auf mit einem Fortsatz, der ebenfalls durch die Öffnungen geführt wird, um die Platten zwischen einem Ende der Ausnehmung und dem Schieber einzuklemmen.

US 2020/0139425 A1 zeigt ein Setzwerkzeug für einen Blindbefestiger, der ebenfalls mit nur einem Außendurchmesser und einem Innengewinde dargestellt ist.

US 2004/0022596 A1 zeigt einen Blindbefestiger mit einem Bolzen, der mehrere Teile zusammenhält, u.a. einen Schaft einer Art Blindnietmutter und ein Element, die gemeinsam durch zwei Werkstücke geführt werden können. Wenn dann der Bolzen gedreht wird, zieht er das Element über ein konisches Ende des Schaftes, und weitet ihn dadurch auf, einen Schließkopf zu bilden.

US 2015/0137560 A1 zeigt einen Befestiger für ein Kunststoffmaterial, das aus mehreren Lagen gebildet ist. Der Befestiger ist nach Art einer Blindnietmutter ausgebildet.

US 2010/0295696 A1 zeigt ein Setzwerkzeug, das mit einer digitalen Anzeige verbunden werden kann.

FR 2 049 334 A5 zeigt ein System zum Setzen einer Blindnietmutter.

US 2 914 106 A zeigt ebenfalls eine Art Blindnietmutter, allerdings nur mit einer einzigen Größe.

Der Erfindung liegt die Aufgabe zugrunde, das Verbinden einer Vielzahl von einzelnen Gegenständen mit einer Trägerstruktur auf einfache und schnelle Weise zu ermöglichen.

Diese Aufgabe wird bei einem Verfahren der eingangs genannten Art mit den Merkmalen des Anspruchs 1 gelöst. Als Befestigungsmittel verwendet man Blindnietmuttern mit einem Nietschaft und einem Innengewinde und durch Betätigen einer Zugeinrichtung, die eine Gewindespindel aufweist, die in das Innengewinde der jeweiligen Blindnietmutter eingeschraubt ist, bildet man einen Schließkopf aus, wobei mindestens zwei Blindnietmuttern unterschiedliche äu-ßere Größen aufweisen und man die äußere Größe der Blindnietmutter nach der Größe der jeweiligen Öffnungen wählt, wobei die Blindnietmuttern unabhängig von ihrer äußeren Größe gleich große Innengewinde aufweisen.

Bei diesem Verfahren benötigt man einen Zugang zu den Öffnungen in den jeweiligen Gegenstand und in der Trägerstruktur jeweils nur von einer Seite. Man kann die Blindnietmutter, die auf die Gewindespindel eines Setzwerkzeugs aufgeschraubt ist, von einer Seite her durch die Öffnung in der Trägerstruktur und durch die Öffnung in den Gegenstand führen und dann durch einen Zug auf die Gewindespindel auf der anderen Seite der Öffnungen den so genannten "Schließkopf" ausbilden. Eine derartige Verbindung lässt sich relativ schnell herstellen, auch wenn die Gewindespindel in die Blindnietmutter eingeschraubt und nach Beendigung des Setzvorganges wieder ausgeschraubt werden muss. In Abhängigkeit von der Größe der Öffnungen wählt man die jeweils passende Blindnietmutter. Allerdings kann man das gleiche Setzwerkzeug verwenden, weil man trotz unterschiedlich großer Blindnietmuttern das gleiche Innengewinde vorfindet und man folglich die gleiche Gewindespindel verwenden kann. Bei unterschiedlichen Blindnietmuttern ist also kein Wechsel des Setzwerkzeugs erforderlich. Dies führt zu einer relativ einfachen Montagemöglichkeit. Das Risiko von Montagefehlern wird klein gehalten.

Erfindungsgemäß weisen die Blindnietmuttern unabhängig von ihrer äußeren Größe die gleiche Setzkraft oder den gleichen Setzweg auf. Damit kann das zum Setzen der Blindnietmuttern verwendete Setzwerkzeug unabhängig von der äußeren Größe der Blindnietmuttern unverändert verwendet werden. Es kann entweder auf die notwendige Setzkraft oder auf den notwendigen Setzweg eingestellt werden. Unabhängig von ihrer äußeren Größe werden die Blindnietmuttern mit der gewünschten Zuverlässigkeit gesetzt.

Vorzugsweise verwendet man Blindnietmuttern, die am Setzkopf einen Indikatorvorsprung aufweisen, der so dimensioniert ist, dass er sich beim Aufbringen der erforderlichen Setzkraft plastisch verformt. Damit ist auf relativ einfache Weise eine Kontrolle möglich, ob die zum Setzen der Blindnietmutter, d.h. die zum Ausbilden des Schließkopfes erforderliche Setzkraft, aufgebracht worden ist.

Vorzugsweise verwendet man Blindnietmuttern, deren Innengewinde sich am schließkopfseitigen Ende verjüngt. Damit wird eine Begrenzung der Einschraubtiefe der Gewindespindel der Zugeinrichtung ermöglicht. Insbesondere bei der Montage von Solar-Paneelen steht oft nur ein begrenzter Freiraum zur Verfügung. Wenn man dafür sorgt, dass die Gewindespindel nicht aus dem Ende der Blindnietmutter herausragen kann, wenn die Gewindespindel in die Blindnietmutter eingeschraubt ist, verhindert man, dass die Gewindespindel Beschädigungen bei den empfindlichen und teuren Solar-Paneelen verursachen kann.

Vorzugsweise verwendet man Blindnietmuttern, die auf der Außenseite des Nietschaftes und/oder auf der dem Nietschaft zugewandten Seite des Setzkopfes eine Oberflächenstruktur aufweist, die sich beim Setzen der Blindnietmutter in den Gegenstand und/oder die Trägerstruktur eindrückt. Damit ist es möglich, eine elektrisch leitende Verbindung zwischen der Blindnietmutter und dem Gegenstand und/oder der Trägerstruktur zu erzeugen und zwar auch dann, wenn der Gegenstand und/oder die Trägerstruktur eine Oberflächenbeschichtung aufweisen, beispielsweise in Form einer Lackierung. Eine elektrisch leitende Verbindung ist insbesondere bei der Montage von Solar-Paneelen vielfach erwünscht.

Vorzugsweise verwendet man Blindnietmuttern, die bei unterschiedlichen äußeren Größen unterschiedliche Farben und/oder Markierungen aufweisen. Dies ist eine Arbeitserleichterung für den Monteur. Er kann für die jeweilige Größe der Öffnung auf einfache Weise die richtige Blindnietmutter herausfinden.

Vorzugsweise verwendet man ein Setzwerkzeug, das zum Ändern von Zugkraft oder Zugweg eine Autorisierung erfordert. Das Setzwerkzeug kann dann zentral von einem Vorarbeiter oder einer Arbeitsvorbereitung eingestellt und an die jeweiligen Monteure ausgegeben werden. Die Monteure können dann das Setzwerkzeug lediglich verwenden, um die Blindnietmutter zu setzen. Sie können aber keine Änderungen vornehmen, die die Qualität des Setzvorganges beeinträchtigen würden. Damit wird das Risiko von Fehlern kleingehalten. Die Autorisierung kann auf unterschiedliche Weise erfolgen. Man kann beispielsweise die Eingabe eines Codes oder dergleichen verlangen. Eine andere Möglichkeit besteht darin, dass das Setzwerkzeug nur von einem Computer oder einer Einstelleinheit mit einer geeigneten Schnittstelle programmiert werden kann. Auch ist es möglich, einen mechanischen Schlüssel zu verwenden, der in einer Schlüsselstellung eine Veränderung von Parametern erlaubt, in einer anderen Schlüsselstellung hingegen nicht, wobei der Schlüssel vom Setzwerkzeug entfernt werden kann.

Die Aufgabe wird auch durch einen Montagesatz mit einer Mehrheit von Befestigern mit den Merkmalen des Anspruchs 7 gelöst. Die Befestiger sind als Blindnietmuttern ausgebildet, von denen jeder einen Nietschaft, einen Setzkopf an einem Ende des Nietschaftes und ein Innengewinde im Nietschaft aufweist, wobei mindestens zwei Blindnietmuttern unterschiedliche äußere Größen aufweisen und die Blindnietmuttern mit unterschiedlichen äußeren Größen gleich große Innengewinde aufweisen.

Mit einem derartigen Montagesatz ist die Montage einer Vielzahl von Gegenständen an einer Trägerstruktur auch dann möglich, wenn die Gegenstände und/oder die Trägerstruktur unterschiedlich große Öffnungen aufweisen, durch die die Befestiger geführt werden müssen. Man kann zum Montieren der Gegenstände an einer Trägerstruktur das gleiche Setzwerkzeug verwenden. Zum Setzen von Blindnietmuttern mit unterschiedlichen äußeren Größen ist keine Umrüstung des Setzwerkzeugs erforderlich.

Erfindungsgemäß weisen Blindnietmuttern mit unterschiedlichen äußeren Grö-ßen die gleiche Setzkraft oder den gleichen Setzweg auf. Das zum Setzen der Blindnietmuttern, d.h. zum Ausbilden des Schließkopfes nach dem Positionieren der Blindnietmutter am jeweiligen Montageort, verwendete Setzwerkzeug kann dann unabhängig von der äußeren Größe der Blindnietmutter betrieben werden. Dies erleichtert die Montage und hält das Risiko von Fehlern klein.

Vorzugsweise weist der Setzkopf der Blindnietmutter einen plastisch verformbaren Indikatorvorsprung auf. Der Indikatorvorsprung befindet sich auf der vom Nietschaft abgewandten Seite des Setzkopfes. Dort liegt ein Druckstück des Setzgerätes an. Wenn das Setzgerät die zum Ausbilden des Schließkopfes erforderliche Zugkraft aufbringt, dann wirkt das Druckstück des Setzgerätes auf den Indikatorvorsprung und verformt ihn plastisch, vorausgesetzt, dass die erforderliche Setzkraft aufgebracht worden ist. Dies ermöglicht später eine einfache optische Kontrolle darüber, ob die Setzkraft aufgebracht worden ist.

Vorzugweise verjüngt sich das Innengewinde am schließkopfseitigen Ende. Damit wird eine Begrenzung für das Einschrauben der Gewindespindel des Setzwerkzeugs erreicht, so dass die Gewindespindel nicht am schließkopfseitigen Ende der Blindnietmutter aus der Blindnietmutter herausragen kann. Damit wird das Risiko von Beschädigungen an dem Gegenstand kleingehalten. Die Blindnietmutter kann durch die Öffnung in der Trägerstruktur und die Öffnung am Gegenstand nur soweit hindurchgeführt werden, bis der Setzkopf an der Trägerstruktur anliegt. Dementsprechend kann man die Länge des Nietschaftes auf den zur Verfügung stehenden Raum abstimmen. Durch die Gewindespindel werden keine zusätzlichen Risiken verursacht.

Vorzugsweise weisen die Blindnietmuttern an der Außenseite des Nietschaftes und/oder an der dem Nietschaft zugewandten Seite des Setzkopfes eine Oberflächenstruktur auf. Die Oberflächenstruktur ist so ausgebildet, dass sie sich in das Material der Trägerstruktur und/oder das Material des Gegenstandes eindrückt, wenn der Schließkopf ausgebildet wird. Wenn der Schließkopf ausgebildet wird, weitet sich vielfach der Nietschaft radial auf, so dass sich die Oberflächenstruktur in den Umfang oder den Umfangsrand der Öffnung eindrücken kann. Dies ermöglicht die Herstellung eines elektrisch leitenden Kontaktes zwischen der Trägerstruktur und der Blindnietmutter bzw. zwischen dem Gegenstand und der Blindnietmutter. Eine derartige elektrische Leitfähigkeit ist vielfach bei der Montage von Solar-Paneelen erwünscht.

Vorzugsweise weisen die Blindnietmuttern mit unterschiedlichen äußeren Grö-ßen unterschiedliche Farben auf. Dies erleichtert für den Monteur die Wahl der "richtigen" Blindnietmutter. Er kann mit einem Blick erkennen, welche Blindnietmutter er für eine bestimmte Befestigungssituation verwenden muss.

Die Erfindung wird im Folgenden anhand eines bevorzugten Ausführungsbeispiels in Verbindung mit einer Zeichnung beschrieben. Hierin zeigen:
- Fig. 1: eine schematische Darstellung zur Erläuterung der Verbindung eines Gegenstandes mit einer Trägerstruktur,
- Fig. 2: eine schematische Darstellung von zwei unterschiedlichen Größen der verfügbaren Öffnungen,
- Fig. 3: eine schematische Darstellung einer Blindnietmutter, teilweise im Schnitt und
- Fig 4: einen Teil eines Montagesatzes mit Blindnietmuttern, teilweise im Schnitt.

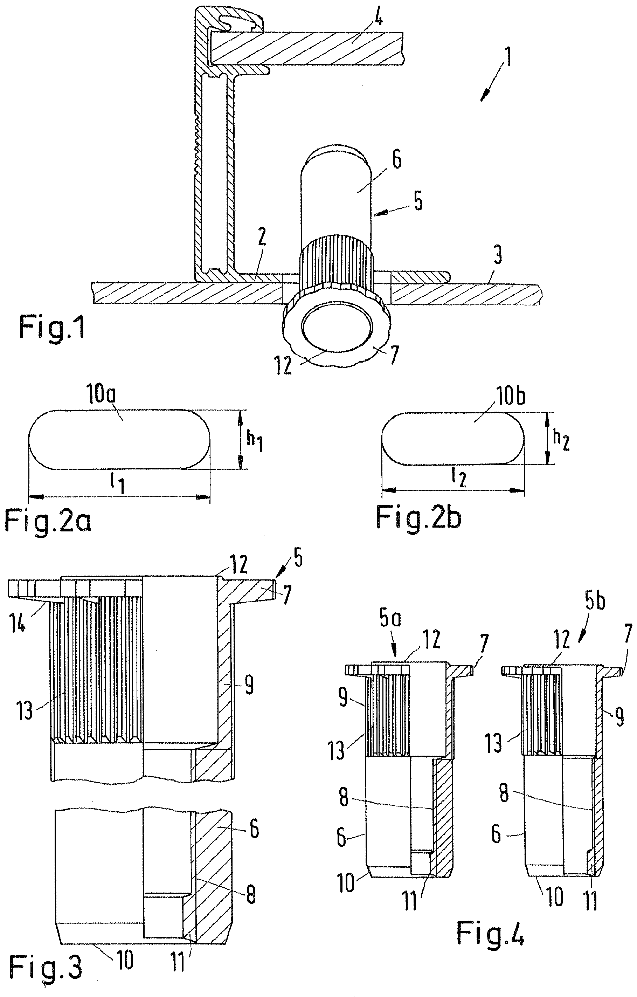

Fig. 1 zeigt schematisch eine Situation 1, bei der ein Gegenstand 2 in Form eines Rahmens an einer Trägerstruktur 3 in Form einer Schiene befestigt werden muss. Der Gegenstand 2 hält dabei ein Solar-Paneel 4. Eine derartige Einbausituation 1 ergibt sich beispielsweise bei der Montage einer Vielzahl von Solar-Paneelen 4 in einer Photovoltaik-Anlage. Hier müssen oft Hunderte oder sogar Tausende Gegenstände 2 an Trägerstrukturen 3 montiert werden.

Um den einzelnen Gegenstand 2 mit der Trägerstruktur 3 zu verbinden, wird eine Blindnietmutter 5 verwendet. Die Blindnietmutter weist einen Nietschaft 6 und einen Setzkopf 7 an einem Ende des Nietschaftes 6 auf. Wie man insbesondere in Fig. 3 erkennen kann, ist ein Innengewinde 8 im Nietschaft 6 ausgebildet. Zum Setzen der Blindnietmutter 5 wird zunächst eine nicht näher dargestellte Gewindespindel eines Setzwerkzeugs in das Innengewinde 8 der Blindnietmutter 5 eingeschraubt. Die Blindnietmutter 5 wird dann durch eine Öffnung in der Trägerstruktur 3 und eine Öffnung in dem Gegenstand 2 geführt, und zwar solange, bis der Setzkopf 7 an der Trägerstruktur 3 anliegt. Das Setzwerkzeug wird dann betätigt und übt beispielsweise über einen elektrischen oderpneumatischen Antrieb eine Zugkraft auf das Innengewinde 8 aus, die dazu führt, dass sich ein Verformungsbereich 9 des Schaftes 6 verformt und einen Schließkopf ausbildet, wie dies von Blindnietmuttern her bekannt ist. Der Schließkopf legt sich dann auf der von der Trägerstruktur 3 abgewandten Seite des Gegenstandes 2 an den Gegenstand 2 an. Der Gegenstand 2 ist dann mit der Trägerstruktur 3 verbunden.

Wie in Fig. 2 dargestellt, gibt es unterschiedliche Größen von Öffnungen, die in der Trägerstruktur 3 oder in dem Gegenstand 2 oder in der Trägerstruktur 3 und dem Gegenstand 2 ausgebildet sein können. Diese Öffnungen sind vielfach als Langlöcher ausgebildet. Beispielsweise gibt es eine erste Öffnung 10a mit einer Länge I1 von 14 mm und einer Höhe h1 von 9 mm. Weiterhin gibt es eine zweite Öffnung 10b mit einer Länge I2 von 10 mm und einer Höhe h2 von 7 mm.

In Photovoltaik-Anlagen sind die Gegenstände 2, also die Rahmen, vielfach aus Aluminium gebildet und weisen zumindest in dem Bereich, der an der Trägerstruktur 3 anliegt, eine relativ geringe Dicke auf, beispielsweise 2 mm. Dies führt zu dem Problem, dass sich der Gegenstand 2 im Bereich des Langlochs ausknöpft oder auf andere Weise verformt, wenn sich der Schließkopf nicht mit der "richtigen" Größe ausbildet. Es ist deswegen erforderlich, für jede Größe der Öffnungen 10a, 10b eine passende Blindnietmutter 5 zu wählen.

Man stellt daher, wie in Fig. 4 dargestellt, zwei (oder mehr) Blindnietmuttern bereit, die unterschiedliche äußere Größen aufweisen. Im Einzelnen ist in Fig. 4 eine Blindnietmutter 5a dargestellt, deren Nietschaftes 6 einen Durchmesser aufweist, der zur Höhe h1 der ersten Öffnung 10a passt, und eine Blindnietmutter 5b, deren Nietschaftes 6 einen Durchmesser aufweist, der zur Höhe h2 der zweiten Öffnung 10b passt. Üblicherweise muss der Durchmesser geringfügig kleiner sein als die jeweilige Höhe h1, h2, so dass beispielsweise die Blindnietmutter 5a einen Nietschaftdurchmesser von etwa 8, 9 mm und die Blindnietmutter 5b einen Nietschaftdurchmesser von etwa 6, 9 mm aufweist.

Allerdings ist das Innengewinde 8 bei den Blindnietmuttern 5a, 5b gleich ausgebildet, beispielsweise mit der Größe M5. Dies gilt unabhängig von der äußeren Größe der Blindnietmutter 5a, 5b, insbesondere unabhängig von dem Durchmesser des Nietschaftes 6.

Man kann erkennen, dass der Nietschaft 6 der Blindnietmutter 5a im Bereich des Innengewindes 8 eine größere Dicke aufweist als bei der Blindnietmutter 5b. Dies ist jedoch unkritisch, weil eine Verformung der jeweiligen Blindnietmutter 5a, 5b in der Regel nicht im Bereich des Innengewindes 8 erfolgt, sondern in dem zuvor erwähnten Verformungsbereich 9. Hier können die Blindnietmuttern 5a, 5b so dimensioniert werden, dass sie unabhängig von ihrer jeweiligen äußeren Größe die gleiche Setzkraft oder alternativ dazu den gleichen Setzweg aufweisen.

Der Setzkopf 7 ist an einem Ende des Nietschafts 6 angeordnet. Das gegenüberliegende Ende des Nietschafts 6 bildet das "schließkopfseitige" Ende 10. Das Innengewinde 8 verjüngt sich am schließkopfseitigen Ende, beispielsweise dadurch, dass hier ein radial nach innen ragender Vorsprung 11 vorgesehen ist. Dieser Vorsprung 11 verhindert, dass ein Gewindedorn so weit in das Innengewinde 8 eingeschraubt werden kann, dass er am schließkopfseitigen Ende 10 aus dem Nietschaft herausragt.

Der Setzkopf 7 weist auf seinem vom Nietschaft 6 abgewandten Ende einen Indikatorvorsprung 12 auf. Der Indikatorvorsprung 12 ist so dimensioniert, dass er sich beim Aufbringen der erforderlichen Setzkraft plastisch verformt. Zum Ausbilden des nicht näher dargestellten Schließkopfes ist eine gewisse Setzkraft erforderlich. Man kann nach dem Setzen der Blindnietmutter 5 auf einfach Weise visuell kontrollieren, ob diese Setzkraft aufgebracht worden ist. Wenn die Setzkraft aufgebracht worden ist, ist der Indikatorvorsprung 12 verformt. Wenn die Setzkraft nicht aufgebracht worden ist, beispielsweise weil der Setzvorgang vor dem vollständigen Ausbilden des Schließkopfes unterbrochen worden ist, dann ist der Indikatorvorsprung 12 nicht ausreichend verformt, was ohne weiteres visuell festgestellt werden kann.

Wie man in den Fig. 1, 3 und 4 erkennen kann, weist der Nietschaft 6 eine Oberflächenstruktur 13 an seinem Umfang auf. Es reicht aus, wenn die Oberflächenstruktur 13 im Verformungsbereich 9 des Nietschaftes 6 ausgebildet ist. Es reicht im Prinzip auch aus, wenn die Oberflächenstruktur 13 in einem Bereich des Nietschaftes 6 ausgebildet ist, der sich beim Ausbilden des Schließkopfes etwas radial nach außen verformt. Die Oberflächenstruktur 13 drückt sich beim Ausbilden des Schließkopfes, wenn also die erforderliche Setzkraft aufgebracht wird, in den Rand der Öffnung von Gegenstand 2 und Trägerstruktur 3 ein und ermöglicht dadurch die Herstellung einer elektrisch leitfähigen Verbindung zwischen dem Gegenstand 2 und der Trägerstruktur 3.

Auch der Setzkopf 7 kann auf seiner dem Nietschaft 6 zugewandten Seite eine Oberflächenstruktur 14 aufweisen. Die Oberflächenstruktur 14 des Setzkopfes drückt sich dann in die Oberfläche der Trägerstruktur 3 ein, an der der Setzkopf 7 beim Setzen der Blindnietmutter 5 anliegt.

Um die Blindnietmuttern 5a von den Blindnietmuttern 5b unterscheiden zu können, können die Blindnietmuttern 5a und 5b unterschiedlich eingefärbt sein oder sonstige Markierungen aufweisen, die optisch oder haptisch wahrnehmbar sind. Beispielsweise kann man die Blindnietmuttern 5b mit der kleineren äußeren Größe schwarz einfärben und die Blindnietmuttern 5a mit der größeren äußeren Größe ohne Farbauftrag belassen.

Zum Befestigen der Gegenstände 2 an der Trägerstruktur 3 wählt der Monteur eine zu der jeweiligen Öffnung 10a, 10b passende Blindnietmutter 5a, 5b aus. Er kann unabhängig von der Wahl der jeweiligen Blindnietmutter 5a, 5b das gleiche Setzwerkzeug verwenden, weil die Blindnietmuttern 5a, 5b das gleiche Innengewinde 8 aufweisen und man somit das Setzwerkzeug nicht umrüsten muss.

Das Setzwerkzeug ist ferner voreingestellt, wobei man entweder die Setzkraft oder den Setzweg einstellen kann.

Die Voreinstellung ist vom Monteur nicht ohne weiteres veränderbar. Zum Verändern der jeweiligen Voreinstellung benötigt man eine Autorisierung. Die Autorisierung kann beispielsweise über die Eingabe eines Codes erfolgen oder über einen mechanischen Schlüssel oder ein Sonderwerkzeug, das nur befugten Personen zur Verfügung steht. Eine weitere Möglichkeit besteht darin, dass die Einstellung oder "Programmierung" des Setzwerkzeugs über einen Computer oder über ein Einstellgerät erfolgt, das ebenfalls nicht allen Personen zugänglich ist, sondern nur dafür zugelassenen Personen, beispielsweise einem Vorarbeiter oder einer Arbeitsvorbereitung.

## Patentansprüche

1. Verfahren zum Verbinden einer Vielzahl von einzelnen Gegenständen (2) mit einer Trägerstruktur (3), bei dem man Verbindungsmittel durch jeweils eine Öffnung in einem Gegenstand (2) und eine Öffnung in der Trägerstruktur (3) führt, wobei Öffnungen an den Gegenständen (2) und/oder Öffnungen an der Trägerstruktur (3) unterschiedliche Größen aufweisen, wobei man als Befestigungsmittel Blindnietmuttern (5) mit einem Nietschaft (6) und einem Innengewinde (8) verwendet und durch Betätigen einer Zugeinrichtung, die eine Gewindespindel aufweist, die in das Innengewinde (8) der jeweiligen Blindnietmutter (5) eingeschraubt ist, einen Schließkopf ausbildet, wobei mindestens zwei Blindnietmuttern (5a, 5b) unterschiedliche äußere Größen aufweisen und man die äußere Größe der Blindnietmutter (5a, 5b) nach der Größe der jeweiligen Öffnungen wählt, **dadurch gekennzeichnet, dass** die Blindnietmuttern (5a, 5b) unabhängig von ihrer äußeren Größe gleich große Innengewinde (8) aufweisen und dass die Blindnietmuttern (5a, 5b) unabhängig von ihrer äußeren Größe die gleiche Setzkraft oder den gleichen Setzweg aufweisen.

2. Verfahren nach Anspruch 1, **dadurch gekennzeichnet, dass** man Blindnietmuttern (5) verwendet, die am Setzkopf (7) einen Indikatorvorsprung (12) aufweisen, der so dimensioniert ist, dass er sich bei Aufbringen der erforderlichen Setzkraft plastisch verformt.

3. Verfahren nach einem der Ansprüche 1 bis 2, **dadurch gekennzeichnet, dass** man Blindnietmuttern (5) verwendet, deren Innengewinde (8) sich am schließkopfseitigen Ende (10) verjüngt.

4. Verfahren nach einem der Ansprüche 1 bis 3, **dadurch gekennzeichnet, dass** man Blindnietmuttern (5) verwendet, die auf der Außenseite ihres Nietschaftes (6) und/oder auf der dem Nietschaft (6) zugewandten Seite des Setzkopfes (7) eine Oberflächenstruktur (13, 14) aufweist, die sich beim Setzen der Blindnietmutter in den Gegenstand (2) und/oder die Trägerstruktur (3) eindrückt.

5. Verfahren nach einem der Ansprüche 1 bis 4, **dadurch gekennzeichnet, dass** man Blindnietmuttern (5) verwendet, die bei unterschiedlichen äußeren Größen unterschiedliche Farben und/oder Markierungen aufweisen.

6. Verfahren nach einem der Ansprüche 1 bis 5, **dadurch gekennzeichnet, dass** man ein Setzgerät verwendet, dass zum Ändern von Zugkraft oder Zugweg eine Autorisierung erfordert.

7. Montagesatz mit einer Mehrheit von Befestigern, wobei die Befestiger als Blindnietmuttern (5) ausgebildet sind, von denen jede einen Nietschaft (6), einen Setzkopf (7) an einem Ende des Nietschafts (6) und ein Innengewinde (8) im Nietschaft (6) aufweist, wobei mindestens zwei Blindnietmuttern (5a, 5b) unterschiedliche äußere Grö-ßen aufweisen, **dadurch gekennzeichnet, dass** die Blindnietmuttern (5a, 5b) mit unterschiedlichen äußeren Größen gleich große Innengewinde (8) aufweisen und dass die Blindnietmuttern (5a, 5b) mit unterschiedlichen äußeren Größen die gleiche Setzkraft oder den gleichen Setzweg aufweisen.

8. Montagesatz nach Anspruch7, **dadurch gekennzeichnet, dass** der Setzkopf (7) der Blindnietmuttern (5) einen plastisch verformbaren Indikatorvorsprung (12) aufweist.

9. Montagesatz nach einem der Ansprüche 7 bis 8, **dadurch gekennzeichnet, dass** sich das Innengewinde (8) am schließkopfseitigen Ende (10) verjüngt.

10. Montagesatz nach einem der Ansprüche 7 bis 9, **dadurch gekennzeichnet, dass** die Blindnietmuttern an (5) der Außenseite des Nietschafts (6) und/oder an der dem Nietschaft (6) zugewandten Seite des Setzkopfes (7) eine Oberflächenstruktur (13, 14) aufweisen.

11. Montagesatz nach einem der Ansprüche 7 bis 10, **dadurch gekennzeichnet, dass** die Blindnietmuttern (5a, 5b) mit unterschiedlichen äußeren Größen unterschiedliche Farben aufweisen.

## Claims

1. A method for connecting a plurality of individual objects (2) to a carrier structure (3), wherein connecting means are passed through an opening in an object (2) and an opening in the carrier structure (3), respectively, wherein openings on the objects (2) and/or openings on the carrier structure (3) have different sizes, wherein blind rivet nuts (5) are used having a rivet shaft (6) and an internal thread (8) and by activating a pulling device, which has a threaded spindle that is screwed into the internal thread (8) of the respective blind rivet nut (5), a closing head is formed, whereby at least two blind rivet nuts (5a, 5b) have different external sizes and the external size of the blind rivet nut (5a, 5b) is selected according to the size of the respective openings, **characterized in that** the blind rivet nuts (5a, 5b) have internal threads (8) of the same size, independently of their external size, and **in that** the blind rivet nuts (5a, 5b) have the same setting force or the same setting path, independently of their external size.

2. A method according to claim 1, **characterized in that** blind rivet nuts (5) are used which have an indicator projection (12) on the setting head (7), which indicator projection (12) is dimensioned such that it is plastically deformed when the required setting force is applied.

3. A method according to one of claims 1 to 2, **characterized in that** blind rivet nuts (5) are used whose internal thread (8) tapers at the end (10) ) directed towards the rivet shaft (6).

4. A method according to one of claims 1 to 3, **characterized in that** blind rivet nuts (5) are used which have, on the outside of their rivet shaft (6) and/or on the side of the setting head (7) directed towards the rivet shaft (6), a surface structure (13, 14) which is pressed into the object (2) and/or the carrying structure (3) when the blind rivet nut is set.

5. A method according to one of claims 1 to 4, **characterized in that** blind rivet nuts (5) are used which, for different external sizes, have different colors and/or markings.

6. A method according to one of claims 1 to 5, **characterized in that** a setting tool is used which requires authorization to change pulling force or pulling path.

7. An assembly set with a plurality of fasteners, wherein the fasteners are formed as blind rivet nuts (5), each of which has a rivet shaft (6), a setting head (7) at one end of the rivet shaft (6), and an internal thread (8) in the rivet shaft (6), wherein at least two blind rivet nuts (5a, 5b) have different external sizes, **characterized in that** the blind rivet nuts (5a, 5b) with different external sizes have internal threads (8) of the same size and **in that** the blind rivet nuts (5a, 5b) with different external sizes have the same setting force or the same setting path.

8. An assembly set according to claim 7, **characterized in that** the setting head (7) of the blind rivet nuts (5) has a plastically deformable indicator projection (12).

9. An assembly set according to one of claims 7 to 8, **characterized in that** the internal thread (8) tapers at the end (10) directed towards the closing head.

10. An assembly set according to one of the claims 7 to 9, **characterized in that** the blind rivet nuts (5) have a surface structure (13, 14) on the outside of the rivet shaft (6) and/or on the side of the setting head (7) directed towards the rivet shaft (6).

11. An assembly set according to one of claims 7 to 10, **characterized in that** the blind rivet nuts (5a, 5b) of different external sizes have different colors.

## Revendications

1. Procédé de raccordement d'une pluralité d'objets individuels (2) à une structure porteuse (3), dans lequel des moyens de raccordement sont introduits respectivement à travers une ouverture dans un objet (2) et une ouverture dans la structure porteuse (3), les ouvertures sur les objets (2) et/ou les ouvertures sur la structure porteuse (3) ayant des dimensions différentes, dans lequel des écrous à rivet aveugle (5) ayant une tige de rivet (6) et un filetage intérieur (8) sont utilisés et par activation d'un dispositif de traction qui a une broche filetée qui est vissée dans le filetage intérieur (8) de l'écrou à rivet aveugle respectif (5), une tête de fermeture est formée, de sorte qu'au moins deux écrous à rivet aveugle (5a, 5b) ont des dimensions extérieures différentes et la taille extérieure de l'écrou à rivet aveugle (5a, 5b) est sélectionnée en fonction de la taille des ouvertures respectives, **caractérisé en ce que** les écrous à rivet aveugle (5a, 5b) ont des filetages intérieurs (8) de la même taille, indépendamment de leur taille extérieure, et **en ce que** les écrous à rivet aveugle (5a, 5b) ont la même force de serrage ou le même réglage chemin, indépendamment de leur taille externe.

2. Procédé selon la revendication 1, **caractérisé en ce qu'**on utilise des écrous à sertir aveugles (5) qui présentent sur la tête de sertissage (7) une saillie indicatrice (12) dimensionnée de manière à se déformer plastiquement lorsque la force de sertissage requise est appliquée.

3. Procédé selon l'une des revendications 1 à 2, **caractérisé en ce qu'**on utilise des écrous à rivet aveugle (5) dont le filetage intérieur (8) se rétrécit à l'extrémité (10) dirigée vers la tige de rivet (6).

4. Procédé selon l'une des revendications 1 à 3, **caractérisé en ce qu'**on utilise des écrous à rivet aveugles (5) qui présentent, sur l'extérieur de leur tige de rivet (6) et/ou sur le côté de la tête de sertissage (7) tourné vers la tige de rivet (6), une structure de surface (13, 14) qui est pressée dans l'objet (2) et/ou la structure porteuse (3) lors de la pose de l'écrou à sertir aveugle.

5. Procédé selon l'une des revendications 1 à 4, **caractérisé en ce qu'**on utilise des écrous à rivet aveugles (5) qui, pour différentes dimensions extérieures, présentent des couleurs et/ou des marquages différents.

6. Procédé selon l'une des revendications 1 à 5, **caractérisé en ce qu'**on utilise un outil de réglage qui nécessite une autorisation pour modifier la force de traction ou la course de traction.

7. Ensemble de montage comprenant une pluralité d'éléments de fixation, les éléments de fixation étant réalisés sous forme d'écrous à rivet aveugle (5) présentant chacun une tige de rivet (6), une tête de pose (7) à une extrémité de la tige de rivet (6) et un filetage intérieur (8) dans la tige de rivet (6), au moins deux écrous à rivet aveugle (5a, 5b) présentant des dimensions extérieures différentes, **caractérisé en ce que** les écrous à rivet aveugle (5a, 5b) présentant des dimensions extérieures différentes présentent des filetages intérieurs (8) de même dimension et **en ce que** les écrous à rivet aveugle (5a, 5b) présentant des dimensions extérieures différentes présentent la même force de pose ou la même course de pose.

8. Ensemble de montage selon la revendication 7, **caractérisé en ce que** la tête de pose (7) des écrous à rivet aveugles (5) présente une saillie indicatrice (12) déformable plastiquement.

9. Ensemble de montage selon l'une des revendications 7 à 8, **caractérisé en ce que** le filetage intérieur (8) se rétrécit à l'extrémité (10) dirigée vers la tête de fermeture.

10. Ensemble de montage selon l'une des revendications 7 à 9, **caractérisé en ce que** les écrous à rivet aveugles (5) présentent une structure de surface (13, 14) sur le côté extérieur de la tige de rivet (6) et/ou sur le côté de la tête de sertissage (7) tourné vers la tige de rivet (6).

11. Ensemble d'assemblage selon l'une des revendications 7 à 10, **caractérisé en ce que** les écrous à sertir aveugles (5a, 5b) de tailles extérieures différentes présentent des couleurs différentes.
